(19) Europäisches Patentamt
European Patent Office
Office européen des brevets

(11) **EP 1 898 390 A1**

(12) **EUROPEAN PATENT APPLICATION**

(43) Date of publication:
**12.03.2008 Bulletin 2008/11**

(51) Int Cl.:
***G09G 3/28*** (2006.01)

(21) Application number: **07115874.5**

(22) Date of filing: **07.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | • **Park, Jung-Pil**<br>  **Gyeonggi-do (KR)**<br>• **Kim, Suk-Ki**<br>  **Gyeonggi-do (KR)**<br>• **Jeon, Young-Jun**<br>  **Gyeonggi-do (KR)** |
| (30) Priority: **11.09.2006 KR 20060087367** | (74) Representative: **Hengelhaupt, Jürgen et al**<br>**Gulde Hengelhaupt Ziebig & Schneider** |
| (71) Applicant: **Samsung SDI Co., Ltd.**<br>**Suwon-si**<br>**Gyeonggi-do (KR)** | **Patentanwälte - Rechtsanwälte**<br>**Wallstrasse 58/59**<br>**10179 Berlin (DE)** |
| (72) Inventors:<br>• **Kim, Jeong-Hoon**<br>  **Gyeonggi-do (KR)** | |

(54) **Plasma display and voltage generator thereof**

(57)   In a plasma display, a first electrode and a second electrode of a transistor may be respectively coupled to a scan electrode and a power source for supplying a scan voltage. The plasma display may include a scan electrode, a first transistor, a first resistor, and a second resistor. The first transistor may include a first electrode electrically coupled to the scan electrode, a second electrode electrically coupled to the power source and a control electrode. The first resistor may be electrically coupled between the scan electrode and the control electrode of the first transistor. The second resistor may be electrically coupled between the control electrode of the transistor and the power source.

FIG.4

**Description**

BACKGROUND OF THE INVENTION

1. Field of the Invention

The present invention relates to a plasma display, and a voltage generator thereof.

2. Description of the Related Art

A plasma display includes a plasma display panel (PDP) that uses plasma generated by a gas discharge process to display characters or images. The PDP includes, depending on its size, more than several scores to millions of pixels arranged in a matrix pattern.

One frame of such a plasma display may be divided into a plurality of subfields having weight values. Each subfield may include a reset period, an address period, and a sustain period. The reset period may initialize each discharge cell to facilitate an addressing operation on the discharge cell. The address period may select turn-on/turn-off cells (i.e., cells to be turned on or off). The sustain period may cause the cells to either continue discharge for displaying an image on the addressed cells or remain inactive.

During the reset period, to initialize a state of the discharge cell, a voltage at the scan electrode may be gradually increased to a Vset voltage, and may be gradually decreased to a Vnf voltage. During the address period, a scan pulse having a scan voltage VscL and an address pulse having a Va voltage may be respectively applied to the scan and address electrodes of the turn-on discharge cell. In general, the VscL voltage and the Vnf voltage may be equal. Accordingly, since an address discharge may not be appropriately generated when the Vnf voltage is equal to the VscL voltage, a low discharge may be generated. In addition, when an address voltage level is increased to prevent the low discharge, the address discharge may be generated in the turn-off discharge cell, resulting in misfiring.

The above information disclosed in this Background section is only for enhancement of understanding of the background of the invention and therefore it may contain information that does not form the prior art that is already known in this country to a person of ordinary skill in the art.

SUMMARY OF THE INVENTION

The present invention has been made in an effort to overcome the above shortcomings of the state of the art. A first aspect of the present invention therefore provides a voltage generator for a plasma display panel and for generating an output voltage that is higher than a supply voltage received at a first terminal of the voltage generator. The voltage generator comprises a first transistor, a first resistor, and a second resistor. The first transistor has a first electrode connected to the first terminal and a second electrode connected to a second terminal. The first resistor has a first end connected to the second terminal and a second end connected to a control electrode of the first transistor. The second resistor has a first end connected to the first terminal and a second end connected to the control electrode of the transistor. At least one of the first and second resistors may be a variable resistor.

The first transistor may be a bipolar transistor, an IGBT, or a MOSFET.

Preferably, the temperature coefficients of the first and second resistors are selected such that a ratio of a resistance of the first resistor over a resistance of the second resistor increases when temperature decreases. In order to achieve this, the first resistor may have a negative temperature coefficient. Additionally or alternatively, the second resistor may have a positive temperature coefficient. The voltage generator may further comprise a second transistor and a third transistor. The second transistor is then series-connected between the first terminal and a first power supply and the third transistor has a first electrode connected to the first power supply and a second electrode connected to the second terminal.

A second aspect of the present invention provides a plasma display panel comprising a voltage generator according to the first aspect of the invention. If the voltage generator of the plasma display panel comprises second and third transistors, the second transistor may be adapted to serve as a ramp switch and to gradually decrease the output voltage that is higher than the scan voltage during a reset period when the second transistor is turned on. [001]

BRIEF DESCRIPTION OF THE DRAWINGS

The above and other features and advantages of the present invention will become more apparent to those of ordinary skill in the art by describing in detail exemplary embodiments thereof with reference to the attached drawings, in which:

FIG. 1 illustrates a schematic diagram of a configuration of a plasma display according to an exemplary embodiment of the present invention;

FIG. 2 illustrates driving waveforms of the plasma display according to an exemplary embodiment of the present invention;

FIG. 3 illustrates a schematic diagram of a scan electrode driver according to the exemplary embodiment of the present invention;

FIG. 4 illustrates a schematic diagram of a ΔV voltage generator according to a first exemplary embodiment of the present invention;

FIG. 5A, FIG. 5B, and FIG. 5C respectively illustrate different configurations of a ΔV voltage generator having a variable resistor;

FIG. 6 illustrates a schematic diagram of a ΔV voltage generator according to a second exemplary embodiment of the present invention; and

FIG. 7 illustrates a schematic diagram of a ΔV voltage generator according to a third exemplary embodiment of the present invention.

## DETAILED DESCRIPTION OF THE INVENTION

The present invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

Like reference numerals refer to like elements throughout.

Throughout this specification and the claims which follow, when it is described that an element is "coupled" to another element, the element may be "directly coupled" to the other element or "electrically coupled" to the other element through a third element. In addition, unless explicitly described to the contrary, the word "comprise" or variations such as "comprises" or "comprising" will be understood to imply the inclusion of stated elements but not the exclusion of any other elements.

In addition, wall charges mentioned in the following description mean charges formed and accumulated on a wall (e.g., a dielectric layer) close to an electrode of a discharge cell. A wall charge will be described as being "formed" or "accumulated" on the electrode, although the wall charges do not actually touch the electrodes. Further, a wall voltage means a potential difference formed on the wall of the discharge cell by the wall charge.

When it is described in the specification that a voltage is maintained, it should not be understood to strictly imply that the voltage is maintained exactly at a predetermined voltage. To the contrary, even if a voltage difference between two points varies, the voltage difference is expressed to be maintained at a predetermined voltage in the case that the variance is within a range allowed in design constraints or in the case that the variance is caused due to a parasitic component that is usually disregarded by a person of ordinary skill in the art. In addition, since threshold voltages of semiconductor elements (e.g., a transistor and a diode) are very low compared to a discharge voltage, they are considered to be 0V.

A plasma display according to an exemplary embodiment of the present invention, and a driving method and voltage generator thereof will now be described with reference to the drawing figures.

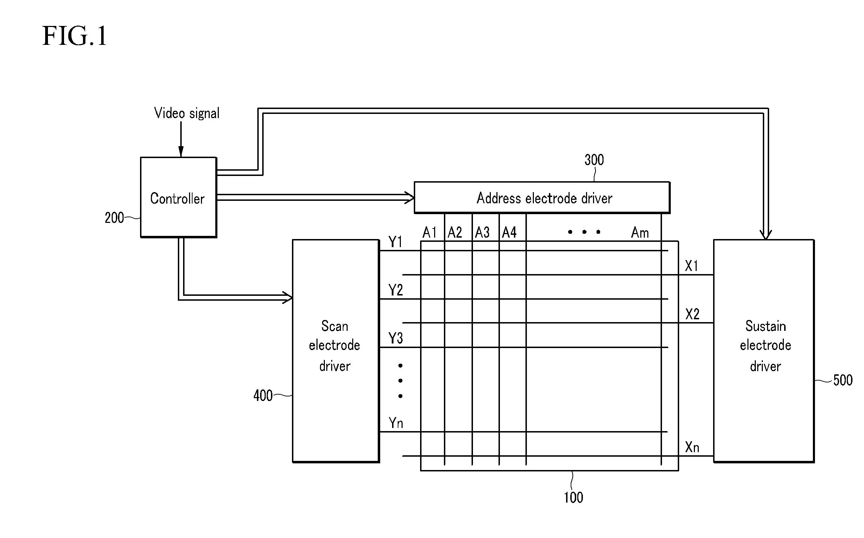

FIG. 1 illustrates a schematic diagram of a configuration of a plasma display according to an exemplary embodiment of the present invention.

As shown in FIG. 1, the plasma display may include a plasma display panel (PDP) 100, a controller 200, an address electrode driver 300, a scan electrode driver 400, and a sustain electrode driver 500.

The PDP 100 may include a plurality of address electrodes A1 to Am extending in a column direction, and a plurality of sustain and scan electrodes X1 to Xn and Y1 to Yn in pairs extending in a row direction. The sustain electrodes X1 to Xn may be formed in respective correspondence to the scan electrodes Y1 to Yn, and ends of the sustain electrodes X1 to Xn are connected in common. In addition, the PDP 100 may include a first substrate (not shown) having the sustain and scan electrodes X1 to Xn and Y1 to Yn, and a second substrate (not shown) having the address electrodes A1 to Am. The two substrates may be arranged to face each other with a discharge space between them so that the scan electrodes Y1 to Yn and the sustain electrodes X1 to Xn may cross the address electrodes A1 to Am. Here, discharge spaces provided at crossing regions of the address electrodes and X and Y electrodes may form discharge cells. The PDP 100 is merely an example, and embodiments of the present invention may be used with other configurations of a PDP.

The controller 200 may receive external video signals, and may output an address driving control signal, a sustain electrode driving control signal, and a scan electrode driving control signal. In addition, the controller 200 may divide a frame into a plurality of subfields. Each subfield may sequentially have a reset period, an address period, and a sustain period.

After receiving the address driving control signal from the controller 200, the address electrode driver 300 may apply a display data signal for selecting discharge cells to be displayed to the respective address electrodes A1 to Am. The sustain electrode driver 500 may receive the sustain electrode driving control signal from the controller 200, and may apply a driving voltage to the sustain electrodes X1 to Xn. The scan electrode driver 400 may receive the scan electrode driving control signal from the controller 200, and may apply the driving voltage to the scan electrodes Y1 to Yn.

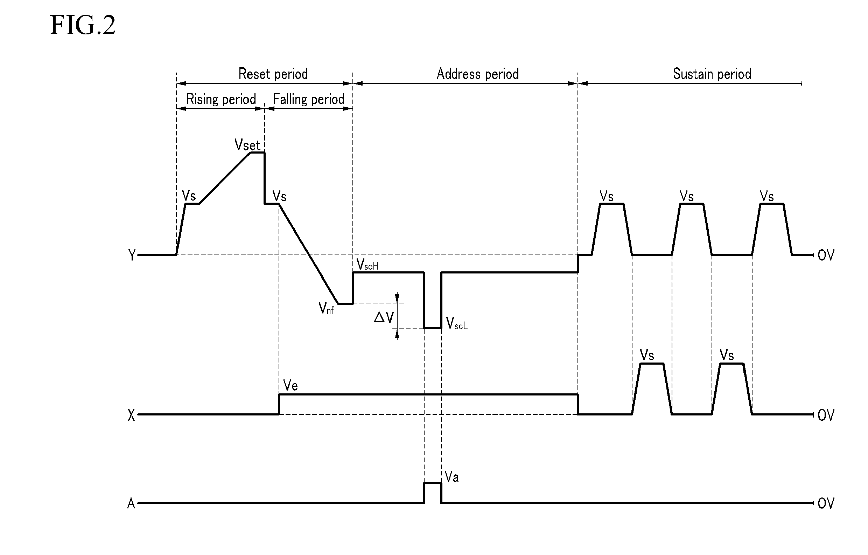

Driving waveforms of the plasma display according to the exemplary embodiment of the present invention will be described with reference to FIG. 2.

FIG. 2 illustrates a diagram representing driving waveforms of the plasma display according to the exemplary embodiment of the present invention. For convenience of descriptions, a driving waveform applied to the scan electrode (hereinafter, referred to as a "Y electrode"), the sustain electrode (hereinafter, referred to as an "X electrode"), and the address electrode (hereinafter, referred to as an "A electrode") that form one cell will be described.

As shown in FIG. 2, a subfield may include a reset period, an address period, and a sustain period, and the reset period may include a rising period and a falling period.

During the rising period of the reset period, while the A and X electrodes may be maintained at a reference voltage (0V in FIG. 2), a voltage at the Y electrode may be gradually increased from a Vs voltage to a Vset voltage. In FIG. 2, the voltage at the Y electrode is increased in a ramp pattern. When the voltage at the Y electrode is increased, a weak discharge may occur between the Y and X electrodes, and between the Y and A electrodes. Accordingly, (-) wall charges may be formed on the Y electrode, and (+) wall charges may be formed on the X and A electrodes. When the voltage of the Y electrode gradually changes as shown in FIG. 2, a weak discharge occurring in a discharge cell may form wall charges such that a sum of an externally applied voltage and the wall charge may be maintained at a discharge firing voltage. Such a process of forming wall charges is disclosed in U.S. Patent No. 5,745,086 to Weber. The Vset voltage may be high enough to fire a discharge in cells of any condition, because every cell is to be initialized in the reset period. In addition, the Vs voltage may equal the voltage applied to the Y electrode during the sustain period, and may be lower than a voltage for firing a discharge between the Y and X electrodes.

During the falling period of the reset period, the voltage at the Y electrode may be gradually decreased from the Vs voltage to a negative voltage Vnf while the A electrode may be maintained at the reference voltage and the X electrode is biased to a Ve voltage. When the voltage of the Y electrode decreases, a weak discharge may occur between the Y and X electrodes, and between the Y and A electrodes. Accordingly, negative (-) wall charges may be formed on the Y electrode and positive (+) wall charges formed on the X and A electrodes may be eliminated. In general, the Vnf voltage is usually set close to a discharge firing voltage between the Y and X electrodes. Then, the wall voltage between the Y and X electrodes may approach 0V, and accordingly, a discharge cell that has not experienced an address discharge during the address period may be prevented from misfiring (the misfiring between the Y and X electrodes) during the sustain period. When the A electrode is maintained at the reference voltage, the wall voltage between the Y and A electrodes may be determined by the Vnf voltage.

Subsequently, during the address period, a scan pulse of a negative voltage VscL and an address pulse of a positive voltage Va may be respectively applied to Y and A electrodes to select turn-on discharge cells, while the X electrode may be maintained at the Ve voltage. Non-selected Y electrodes may be biased at a voltage VscH that is higher than the voltage VscL, and the reference voltage may be applied to the A electrodes of the turn-off cells (i.e., cells to be turned off). Selected Y electrodes may receive the VscL voltage and selected A electrodes may receive the Va voltage, resulting in an address discharge being generated in the selected discharge cell. Accordingly, (+) wall charges may be formed on the Y electrode and (-) wall charges may be formed on the A and X electrodes of the selected discharge cell. For such an operation, the scan electrode driver 400 may select a Y electrode receiving the scan pulse of the scan voltage VscL among the scan electrodes Y1 to Yn. For example, in a single driving method, the Y electrode may be selected according to an order of arrangement of the scan electrodes Y1 to Yn in the vertical direction. When a Y electrode is selected, the address electrode driver 300 may select turn-on cells among cells formed on the selected Y electrode. That is, the address electrode driver 300 may select A electrodes to which the address pulse of the voltage of Va may be applied among the address electrodes A1 to Am.

In further detail, when the scan pulse of the VscL voltage is applied to the scan electrode of a first row (Y1 in FIG. 1), the address pulse of the Va voltage may be applied to the A electrode positioned on the turn-on discharge cell of the first row. Then, a discharge may be generated between the Y electrode of the first row and the A electrode receiving the Va voltage. Accordingly, (+) wall charges may be formed on the Y electrode, and (-) wall charges may be formed on the A and X electrodes. Thus, a wall voltage Vwxy may be formed between the Y and X electrodes such that a potential of the Y electrode is higher than the potential of the X electrode. Subsequently, when the scan pulse of the VscL voltage is applied to the Y electrode of a second row (Y2 in FIG. 1), the address pulse of the Va voltage may be applied to the A electrode positioned on the turn-on discharge cell of the second row. Then, an address discharge may be generated in the discharge cell formed by the A electrode receiving the Va voltage and the Y electrode of the second row, and wall charges may be formed in the discharge cell as described above. In a like manner, when the scan pulse of the VscL voltage is sequentially applied to the Y electrodes of remaining rows, the address pulse of the Va voltage may be applied to the A electrode positioned on the turn-on discharge cell to form the wall charges.

The scan voltage VscL according to the exemplary embodiment of the present invention may be lower than the Vnf voltage, which is a final voltage applied to the Y electrode during the reset period, by a ∆V voltage. Here, an explanation of why an address discharge may be generated in the discharge cell when the scan voltage VscL, lower than the Vnf voltage, is applied and the Va voltage is applied, and why the low discharge is prevented will now be described.

During the reset period, when the Vnf voltage that is the final voltage is applied to the Y electrode, a sum of the wall voltage between the A and Y electrodes and the externally applied Vnf voltage between the A and Y electrodes may be set to be a discharge firing voltage Vfay between the A and Y electrodes.

A discharge may be generated when the scan voltage VscL is applied to the Y electrode and the 0V is applied to the A electrode during the address period, because a voltage that is higher than the Vfay voltage is formed between the A and Y electrode. However, in the above case, discharge may not be generated since a discharge delay maybe longer than widths of the scan and address pulses.

In contrast, when the Va voltage is applied to the A electrode and the scan voltage VscL is applied to the Y electrode, the voltage that is higher than the Vfay voltage is formed between the A and Y electrodes, the discharge delay may be reduced to be shorter than the widths of the scan and address pulses, and discharge may be generated. In general, when the scan voltage that is equal to the Vnf voltage is applied to the Y electrode, discharge may be generated since the voltage that is higher than the Vfay voltage is formed between the A and Y electrodes. However, when the VscL voltage, which is lower than the Vnf voltage by the ∆V voltage, is applied to the Y electrode as in the exemplary embodiment of the present invention, the voltage between the A and Y electrodes is further increased, the discharge delay may be further reduced, and therefore, discharge may be appropriately generated. Accordingly, low address discharge may be prevented.

During the sustain period, sustain pulses of opposite phases, e.g., a high level voltage Vs and a low level voltage 0V, may be applied to the Y electrode and the X electrode. Then, a sustain discharge may be generated in the selected discharge cell during the address period. Here, the number of sustain pulses corresponds to the weight value of the corresponding subfield.

In general, to provide two different voltages, i.e., the Vnf voltage that is the final voltage during the reset period and the VscL voltage that is the scan voltage during the address period, two separate power sources, i.e., a power source for generating the Vnf voltage and a power source for generating the VscL voltage, are typically needed. Hereinafter, the scan electrode driver 400 for generating two voltages using a single power source will be described.

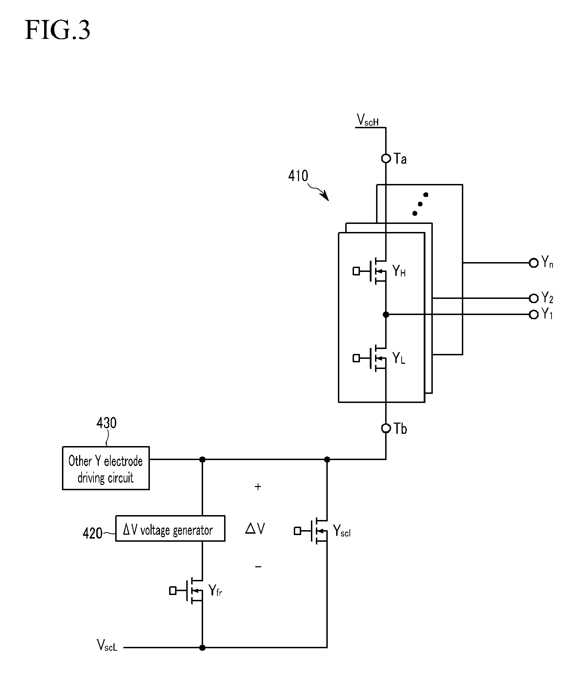

FIG. 3 illustrates a diagram representing the scan electrode driver 400 according to an exemplary embodiment of the present invention.

As shown in FIG. 3, the scan electrode driver 400 may include a plurality of scan integrated circuits (ICs) 410, a ∆V voltage generator 420, transistors Yfr and Yscl, and other Y electrode driving circuit 430. In FIG. 3, the respective transistors are illustrated as n-channel field effect transistors (particularly, n-channel metal oxide semiconductor (NMOS) transistors), and a body diode is formed in the respective transistors in a direction from a source to a drain. Other transistors having similar functions may be used in place of the NMOS transistors. In addition, while the transistors are respectively illustrated as a single transistor in FIG. 3, the present invention is not limited thereto, e.g., each transistor may be formed by a plurality of transistors coupled in parallel.

The plurality of scan ICs 410 respectively may include a transistor $Y_H$, a transistor $Y_L$, a terminal Ta, and a terminal Tb in common. A drain of the transistor $Y_H$ may be coupled to the terminal Ta, and a source of the transistor $Y_L$ may be coupled to the terminal Tb. A source of the transistor $Y_H$ may be coupled to a drain of the transistor $Y_L$, and a node of the transistors $Y_H$ and $Y_L$ may be coupled to one of the scan electrodes Y1 to Yn. A voltage VscH may be applied to the terminal Ta by a power source VscH.

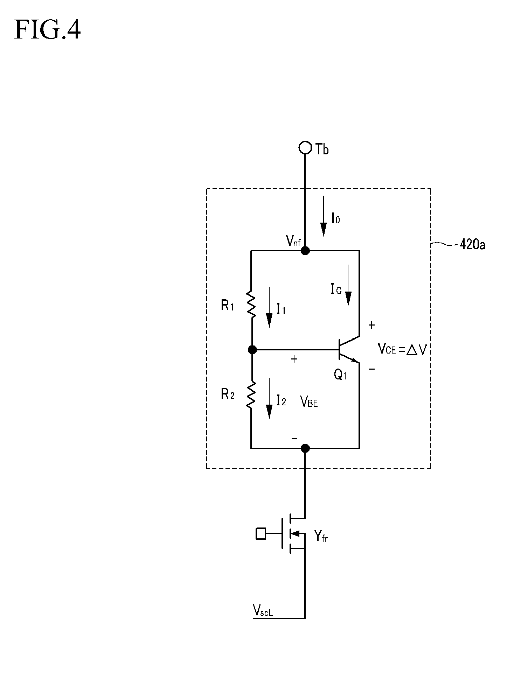

A drain of the transistor Yscl may be coupled to the terminal Tb of the scan IC 410, and a source thereof may be coupled to a power source VscL for supplying the VscL voltage. The ∆V voltage generator 420 may be coupled between the terminal Tb and a drain of the transistor Yfr, and the source of the transistor Yfr may be coupled to the power source VscL for supplying the VscL voltage. Here, the transistor Yfr may serve as a ramp switch, may be turned on to supply a predetermined current to the Y electrode and may gradually decrease the voltage at the Y electrode. A method for supplying the predetermined current to the Y electrode through the transistor Yfr and gradually decreasing the voltage at the Y electrode is well known to those skilled in the art, and therefore detailed descriptions thereof will be omitted. The ∆V voltage generator 420 may generate a voltage ∆V (Vnf-VscL) shown in FIG. 2 without additionally providing another power source. Various configurations of the ∆V voltage generator 420 will be described below with reference to FIG. 4 to FIG. 7.

The other Y electrode driving circuit 430 may be coupled to the terminal Tb and the Y electrode, and may generate various driving waveforms (e.g., the rising waveform of the reset period, and the sustain pulse) to be applied to the Y electrode. The configuration of the other Y electrode driving circuit 430 is not directly related to the exemplary embodiment of the present invention, and therefore a description thereof will be omitted.

During the falling period of the reset period, the transistor Yfr and respective transistors $Y_L$ of the plurality of scan ICs 410 may be turned on, and the voltage at the Y electrode may be gradually decreased to the voltage Vnf, i.e., VscL+$\Delta$V, by the $\Delta$V voltage generator 420. The voltage at the Y electrode may be gradually decreased to the VscL voltage when the transistor Yfr is turned on, but when the $\Delta$V voltage generated by the $\Delta$V voltage generator 420 is added, the voltage at the selected Y electrode may be decreased to the voltage Vnf (VscL+$\Delta$V).

During the address period, the transistor Yscl may be turned on. In the scan IC corresponding to the scan electrode to be selected, the transistor $Y_L$ may be turned on, and the scan voltage VscL may be applied to the corresponding selected Y electrode. In the scan IC corresponding to the scan electrode not to be selected, the transistor $Y_H$ may be turned on, and the VscH voltage may be applied to the corresponding Y electrode not to be selected.

Hereinafter, various configurations of the $\Delta$V voltage generator 420 for generating a voltage difference of $\Delta$V will be described with reference to FIG. 4 to FIG. 7 in further detail.

FIG. 4 illustrates a schematic diagram of a $\Delta$V voltage generator 420a according to a first exemplary embodiment of the present invention. The $\Delta$V voltage generator 420a may include a transistor Q1 and resistors R1 and R2. Here, the transistor Q1 may be a bipolar transistor.

A collector of the transistor Q1 may be coupled to the terminal Tb of the plurality of scan ICs 410, and an emitter thereof may be coupled to the drain of the transistor Yfr. A terminal of the resistor R1 may be coupled to the collector of the transistor Q1 (i.e., the terminal Tb), and another terminal of the resistor R1 may be coupled to a base of the transistor Q1. A terminal of the resistor R2 may be coupled to the base of the transistor Q1 and another terminal of the resistor R2 may be coupled to the emitter of the transistor Q1. In addition, the resistors R1 and R2 may be coupled to each other, and a node thereof may be coupled to the base of the transistor Q1.

When a current lo is low, the transistor Q1 is turned off, and the current lo flows to the resistors R1 and R2. However, when the current lo flows enough to turn on the transistor Q1, the current lo flows to the resistors R1 and R2 and the transistor Q1. In this case, a collector-emitter voltage $V_{CE}$ of the transistor Q1 is given as Equation 1.

$$V_{CE} = I1*R1 + I2*R2 \qquad\qquad (1)$$

In Equation 1, when a base current of the transistor Q1 is ignored, the current I1 may be given as I1≈I2. The current I2 may be given as I2=$V_{BE}$/R2. Accordingly, the collector-emitter voltage $V_{CE}$ of the transistor Q1 may be given as Equation 2.

$$V_{CE} = (1 + R1/R2) * V_{BE} \qquad\qquad (2)$$

Here, the collector-emitter voltage $V_{CE}$ of the transistor Q1 is the $\Delta$V voltage generated by the $\Delta$V voltage generator 420a. Referring to Equation 2, the collector-emitter voltage ($V_{CE}$=$\Delta$V) of the transistor Q1 may be established to be a desired value in proportion to a base-emitter voltage $V_{BE}$ of the transistor Q1 when a ratio of sizes of the resistors R1 and R2 is adjusted.

That is, the voltage $\Delta$V given as Equation 2 may be generated by the $\Delta$V voltage generator 420a according to the first exemplary embodiment of the present invention, and a value of $\Delta$V may be determined by the sizes of the resistors R1 and R2 and the base-emitter voltage $V_{BE}$ of the transistor Q1. When the base-emitter voltage $V_{BE}$ of the transistor Q1 is set as a predetermined value by characteristics of the transistor Q1, the desired $\Delta$V may be obtained by changing values of the resistors R1 and R2. Particularly, the $\Delta$V may be set to various values by changing the values of the resistors R1 and R2 by the $\Delta$V voltage generator according to the first exemplary embodiment of the present invention.

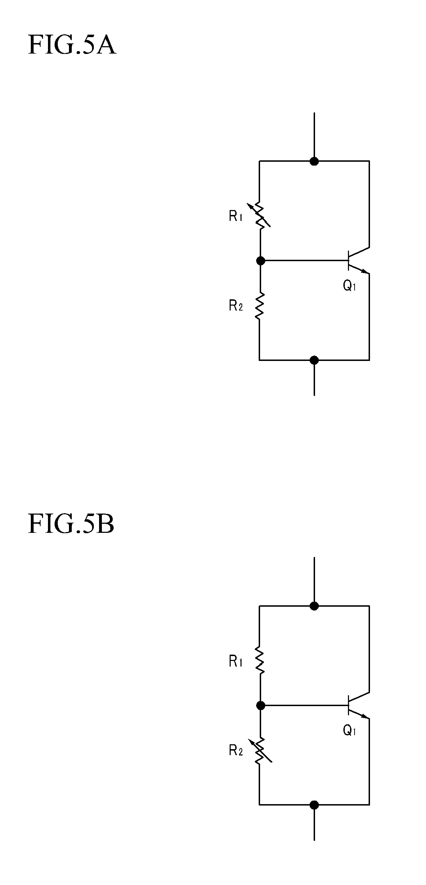

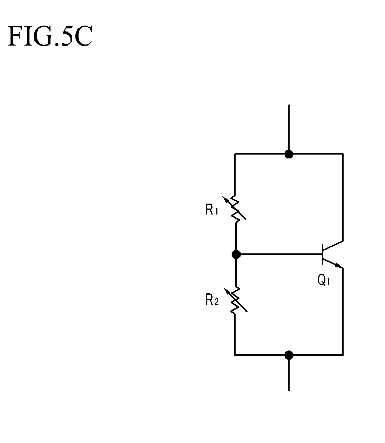

In addition, rather than using fixed resistors, variable resistors may be used for the resistors R1 and R2 as shown in FIG. 5A, 5B, and 5C. That is, a variable resistor may be used for the resistor R1 and/or the resistor R2. When variable resistors are used for the resistors R1 and R2, the value of $\Delta$V may be changed by adjusting the variable resistors after design. Accordingly, the low discharge may be further improved.

Also, a resistor that varies according to temperature may be used for the resistors R1 and R2. That is, the resistors R1 and R2 may be set to have a positive temperature coefficient (PTC) (i.e., a characteristic of increasing resistance as the temperature increases), or they may be set to have a negative temperature coefficient (NTC) (i.e., a characteristic of decreasing resistance as the temperature increases). When the temperature is decreased, the wall charges in the discharge cell are not actively changed, and the low address discharge deteriorates. In this case, when a ratio R1/R2 increases when temperature decreases, the value of $\Delta$V may be further increased by Equation 2 when the temperature is decreased. Accordingly, the problem in the low address discharge at the low temperature may be solved. Thus, a temperature coefficient of resistor R1 may be set to be negative. Additionally or alternatively, a temperature coefficient of resistor R2 may be set to be positive. In other cases, the problem caused by the temperature may be solved by appropriately setting the resistors R1 and R2 that vary according to temperature.

It has been described that the transistor Q1 is a bipolar transistor according to the first exemplary embodiment of the present invention, but the present invention is not limited thereto. For example, a metal-oxide semiconductor field effect transistor (MOSFET) or an insulated gate bipolar transistor (IGBT) may be used, which will now be described.

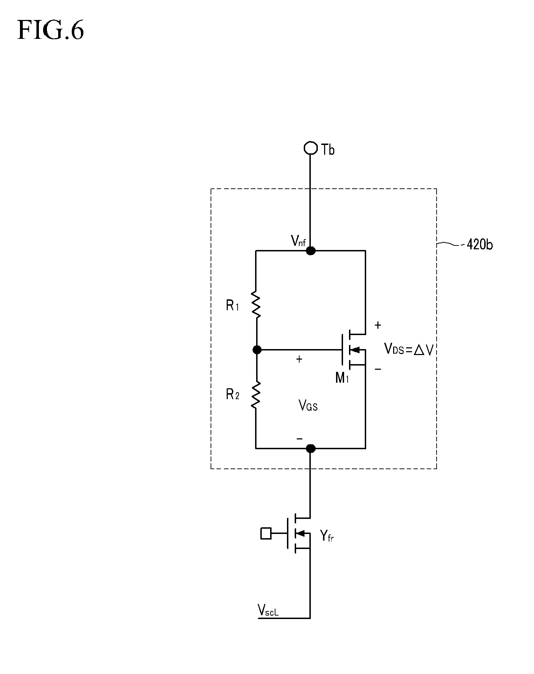

FIG. 6 illustrates a schematic diagram of a $\Delta V$ voltage generator 420b according to a second exemplary embodiment of the present invention. As shown in FIG. 6, the $\Delta V$ voltage generator 420b according to the second exemplary embodiment of the present invention is the same as that of the first exemplary embodiment of the present invention, except that bipolar transistor Q1 is replaced with a MOSFET transistor M1, and therefore, descriptions of parts having been described will be omitted.

Since the $\Delta V$ voltage generator 420b according to the second exemplary embodiment of the present invention uses the transistor M1, the $\Delta V$ voltage, which is a drain-source voltage $V_{DS}$ of the transistor M1, is given as Equation 3.

$$V_{DS} = (1 + R1/R2) * V_{GS} \qquad (3)$$

In Equation 3, $V_{GS}$ is a gate-source voltage of the transistor M1. As shown in Equation 3, when using the transistor M1, the base-emitter voltage $V_{BE}$ of the transistor Q1 in Equation 2 may be replaced with a gate-source voltage $V_{GS}$ of the transistor M1.

As described, in the $\Delta V$ voltage generator 420b according to the second exemplary embodiment of the present invention, the value of $\Delta V$ may be determined by the gate-source voltage ($V_{GS}$) of the transistor M1 and the values of the resistors R1 and R2 as shown in Equation 3.

In addition, in the $\Delta V$ voltage generator 420b according to the second exemplary embodiment of the present invention, the resistors R1 and R2 may be variable resistors or may be resistors that vary according to temperature, as described above.

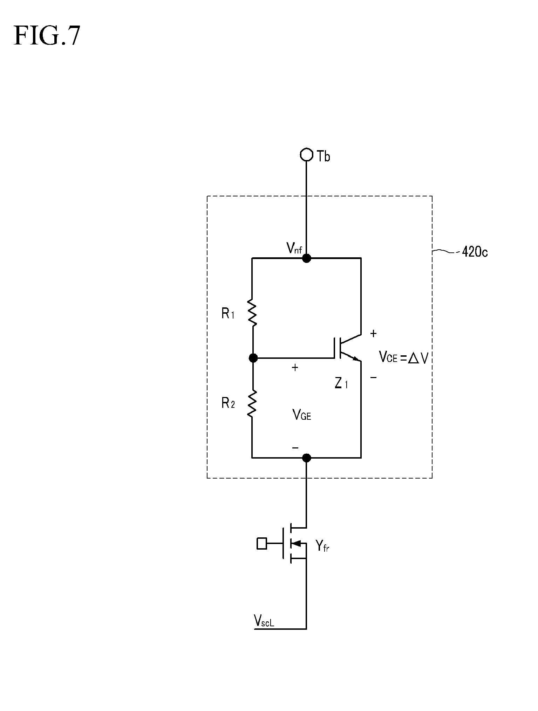

FIG. 7 illustrates a diagram representing a $\Delta V$ voltage generator 420c according to a third exemplary embodiment of the present invention. As shown in FIG. 7, the $\Delta V$ voltage generator 420c according to the third exemplary embodiment of the present invention is the same as that of the exemplary embodiment of the present invention, except that the bipolar transistor Q1 is replaced with an IGBT transistor Z1, and therefore, descriptions of parts having been described will be omitted.

Since the $\Delta V$ voltage generator 420c according to the third exemplary embodiment of the present invention uses the IGBT transistor Z1, the $\Delta V$ voltage, which is a collector-emitter voltage $V_{CE}$ of the transistor Z1, may be given as Equation 4.

$$V_{CE} = (1 + R1/R2) * V_{GE} \qquad (4)$$

In Equation 4, $V_{GE}$ is a gate-emitter voltage of the transistor Z1. As shown in Equation 4, when the transistor Z1 is the IGBT, the base-emitter voltage $V_{BE}$ of the bipolar transistor Q1 in Equation 2 may be replaced with the a gate-emitter voltage $V_{GE}$ of the transistor Z1.

As described, in the $\Delta V$ voltage generator 420c according to the third exemplary embodiment of the present invention, the value of $\Delta V$ may be determined by the gate-emitter voltage $V_{GE}$ of the transistor Z1 and the values of the resistors R1 and R2.

In addition, in the $\Delta V$ voltage generator 420c according to the third exemplary embodiment of the present invention, the resistors R1 and R2 may be variable or may be resistors that vary according to temperature, as described above.

Accordingly, since the $\Delta V$ voltage, which is a constant voltage, may be generated using any of the $\Delta V$ voltage generators 420a, 420b, and 420c according to the first to third exemplary embodiments of the present invention, the Vnf voltage may be generated by using a single power source VscL. That is, the Vnf voltage and the VscL voltage having different levels may be supplied using the $\Delta V$ voltage generator 420a, 420b, and 420c according to the first to third exemplary embodiments of the present invention and the single power source VscL.

In general, the base-emitter voltage $V_{BE}$ of the transistor Q1, the gate-source voltage $V_{GS}$ of the transistor M1, and the gate-emitter voltage $V_{GE}$ of the transistor Z1 may exhibit NTC characteristics. That is, values of $V_{BE}$, $V_{GS}$ and $V_{CE}$ may decrease as temperature increases. Referring to Equations 2, 3, and 4, the value of $\Delta V$ may decrease as temperature increases. At a high temperature, since the wall charges are actively moved in the discharge cell, the value of $\Delta V$ may need to be low to prevent low discharge. Accordingly, since the value of $\Delta V$ is reduced when the $\Delta V$ voltage

generators according to the first to third exemplary embodiments of the present invention are used at increased temperatures, low discharge may be further improved at a high temperature. In addition, since the values of $V_{BE}$, $V_{GS}$, and $V_{CE}$ may further increase as the temperature decreases, the value of $\Delta V$ may further increase. Therefore, low discharge caused by low temperature may be prevented.

According to exemplary embodiments of the present invention, a scan voltage and a final voltage of a reset period may be generated using one single power source. In addition, a value of $\Delta V$ may be variously realized by simply changing the resistors R1 and R2. These resistors may be variable or may change with temperature. Further, low address discharge may be efficiently prevented.

**Claims**

1. A voltage generator (420), for a plasma display panel and for generating an output voltage that is higher than a supply voltage received at a first terminal of the voltage generator, the voltage generator comprising:

   a first transistor (Q1) having a first electrode connected to the first terminal and a second electrode connected to a second terminal;
   a first resistor (R1) having a first end connected to the second terminal and a second end connected to a control electrode of the first transistor; and
   a second resistor (R2) having a first end connected to the first terminal and a second end connected to the control electrode of the first transistor.

2. The voltage generator as claimed in claim 1, wherein at least one of the first and second resistors (R1, R2) is a variable resistor.

3. The voltage generator as claimed in one of claims 1 or 2, wherein the first transistor (Q1) is a bipolar transistor, an IGBT, or a MOSFET.

4. The voltage generator as claimed in one of the preceding claims, wherein the temperature coefficients of the first and second resistors (R1, R2) are selected such that a ratio of a resistance of the first resistor (R1) over a resistance of the second resistor (R2) increases when temperature decreases.

5. The voltage generator as claimed in claim 4, wherein the first resistor (R1) has a negative temperature coefficient.

6. The voltage generator as claimed in one of the claims 4 or 5, wherein the second resistor (R2) has a positive temperature coefficient.

7. The voltage generator as claimed in one of the preceding claims, the voltage generator further comprising:

   a second transistor (Yfr), series-connected between the first terminal and a first power supply; and
   a third transistor (Yscl), having a first electrode connected to the first power supply and a second electrode connected to the second terminal.

8. A plasma display panel, comprising a voltage generator (420) according to one of the preceding claims.

9. The plasma display panel as claimed in claim 8, the plasma display panel comprising a voltage generator as claimed in claim 7, wherein the second transistor (Yfr) is adapted to serve as a ramp switch and to gradually decrease the output voltage when the second transistor is turned on.

10. Use of a voltage generator as claimed in one of the claims 1 through 7 for driving a plasma display panel.

FIG.1

Video signal

Controller 200

Address electrode driver 300

A1 A2 A3 A4 · · · Am

Scan electrode driver 400

Y1
Y2
Y3
·
·
·
Yn

X1
X2
Xn

Sustain electrode driver 500

100

FIG.2

# FIG.3

FIG.4

FIG.5A

FIG.5B

FIG.5C

FIG.6

# FIG.7

European Patent Office

**EUROPEAN SEARCH REPORT**

Application Number

EP 07 11 5874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 6 040 827 A (SHIINA KAZUHIRO [JP] ET AL) 21 March 2000 (2000-03-21)<br>* column 1, line 9 - line 26 *<br>* column 9, line 55 - column 11, line 20 *<br>* column 13, line 17 - line 50 *<br>* figures 8,11-13 * | 1-3,8<br><br>7,9 | INV.<br>G09G3/28 |
| P,X | EP 1 750 245 A (SAMSUNG SDI CO LTD [KR]) 7 February 2007 (2007-02-07)<br>* paragraphs [0001], [0062] - [0071] *<br>* figures 7,8 * | 1-3,7,8 | |
| Y | EP 1 271 462 A (FUJITSU LTD [JP] HITACHI LTD [JP]) 2 January 2003 (2003-01-02)<br>* paragraphs [0033], [0051] - [0053] *<br>* figure 7 * | 7,9 | |
| A | EP 0 846 858 A (DELCO ELECTRONICS CORP [US] DELPHI TECH INC [US]) 10 June 1998 (1998-06-10)<br>* page 8, line 47 - line 58 *<br>* figure 5 * | 4-6 | TECHNICAL FIELDS SEARCHED (IPC)<br><br>G09G |
| A | EP 1 564 404 A (DELPHI TECH INC [US]) 17 August 2005 (2005-08-17)<br>* paragraphs [0022], [0023] *<br>* figure 3 * | 4-6 | |

The present search report has been drawn up for all claims

| Place of search | Date of completion of the search | Examiner |
|---|---|---|
| The Hague | 16 November 2007 | Ladiray, Olivier |

**ANNEX TO THE EUROPEAN SEARCH REPORT
ON EUROPEAN PATENT APPLICATION NO.**

EP 07 11 5874

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2007

| Patent document cited in search report | | Publication date | Patent family member(s) | | Publication date |
|---|---|---|---|---|---|
| US 6040827 | A | 21-03-2000 | NONE | | |
| EP 1750245 | A | 07-02-2007 | US | 2007029942 A1 | 08-02-2007 |
| EP 1271462 | A | 02-01-2003 | JP | 2003015602 A | 17-01-2003 |
| | | | KR | 20030003653 A | 10-01-2003 |
| | | | US | 2003001512 A1 | 02-01-2003 |
| EP 0846858 | A | 10-06-1998 | DE | 69719693 D1 | 17-04-2003 |
| | | | DE | 69719693 T2 | 14-08-2003 |
| | | | US | 5819713 A | 13-10-1998 |
| EP 1564404 | A | 17-08-2005 | US | 2005178372 A1 | 18-08-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5745086 A, Weber